# EUROPÄISCHE PATENTSCHRIFT

(11) **EP 1 306 242 B1**
(45) Veröffentlichungstag und Bekanntmachung des Hinweises auf die Patenterteilung: **31.05.2006**
(21) Anmeldenummer: 02021407.8
(22) Anmeldetag: 25.09.2002
(51) Int. Cl.: B60H 1/00, B60S 1/08

(54) **Sensor zur Detektion einer Beschlagsneigung sowie Sensormodul**
Sensor for detecting incipient fogging and sensor module
Capteur de détection d'une tendance à s'embuer et module de capteur

(30) Priorität: 26.10.2001 DE 10152999
(43) Veröffentlichungstag der Anmeldung: 02.05.2003
(73) Patentinhaber: Preh GmbH, 97616 Bad Neustadt a.d. Saale (DE)
(72) Erfinder: Schmitt, Hans-Michael, Dr., 97702 Münnerstadt (DE); Bach, Jürgen, 97616 Salz (DE); Oenning, Günther, 97618 Niederlauer (DE); Polzer, Thomas, Dr., 97616 Bad Neustadt (DE); Blaufuss, Martin, 98617 Sülzfeld (DE); Hartmann, Rudolf, 97616 Salz (DE)
(74) Vertreter: Dietrich, Barbara

(56) Entgegenhaltungen:
- WO-A-01/58731
- DE-A- 3 721 659
- US-A- 5 568 977
- US-A- 5 751 071

## Beschreibung

Die Erfindung betrifft ein Sensormodul zur Detektion einer Beschlagneigung einer Scheibe, insbesondere einer Kraftfahrzeugscheibe.

Bekanntlich werden bei geregelten Heiz- und Klimaanlagen bei der Regelung die für das Komfortempfinden wesentlichen Einflußgrößen berücksichtigt. Insbesondere der beginnende Beschlag an der Windschutz- bzw. den anderen Scheiben soll dabei vermieden werden. Beschlag tritt dann auf, wenn bei gegebener relativer Luftfeuchte im Kraftfahrzeug durch äußere Einflüsse die Scheibentemperatur kälter als die Lufttemperatur im Innenraum ist (wird) und so an der Scheibeninnenseite die Taupunkttemperatur unterschritten wird. Auch eine Erhöhung der Innenraumfeuchte erhöht die Gefahr der Beschlagbildung. Zur Erkennung werden Beschlag- bzw. Feuchtesensoren eingesetzt.

Eine Vorrichtung zur Erfassung des Betauungs- oder Vereisungsgrades einer Fahrzeugscheibe gibt die DE 43 16 557 A1 wieder. Hierbei soll ein kleinbauender Sensor ein Signal über den Betauungs- oder Vereisungsgrad einer großflächigen Scheibenfläche liefern. Zur Vorrichtung zugehörig ist ein wärmeleitender Körper, der mit der Fahrzeugscheibe in wärmeleitender Verbindung steht und der Sensor, der in der Nähe eines Verbindungspunktes zwischen dem Körper und der Fahrzeugscheibe angeordnet ist. Als wärmeleitender Körper wird die Nutzung eines Innenspiegelfusses vorgeschlagen. Eine Auswerteeinheit kann dabei im Spiegelfuß integriert werden, die ihrerseits mit dem Sensor über kurze Verbindungsleitungen elektrisch verbunden ist. Mit Hilfe der Information aus der Auswerteeinheit werden rechtzeitig Gegenmaßnahmen, z.B. das Einschalten eines Gebläsemotors, aktiviert.

Aus der DE 695 04 803 T2 ist eine Vorrichtung zur Entnebelung von Fahrzeugscheiben bekannt. Ein kombinierter Temperaturfühler und Feuchtesensor sind an der Windschutzscheibe angeklebt.

Ein kapazitiver Feuchtesensor für Klimaautomaten ist in einem Beitrag in der ATZ Automobiltechnische Zeitschrift 102 (2000)1 auf den Seiten 42-44 im Aufbau als auch funktionsmäßig dargestellt. Der kapazitiver Feuchtesensor ist in einem Modul untergebracht, welches zur Messung der Scheibentemperatur einen Thermopile aufweist. Mit Hilfe des beschriebenen kapazitiven Dünnschichtsensors wird die relative Luftfeuchte ermittelt. Diese gibt bei einer bestimmten Temperatur das Verhältnis zwischen der vorhandenen Feuchtigkeit und der maximal möglichen Feuchtigkeit an. Bei Erreichen der maximal möglichen Feuchtigkeit wird die korrespondierende Temperatur als Taupunkttemperatur beschrieben. Berechnet man mittels gemessener relativer Luftfeuchtigkeit und Temperatur die Taupunkttemperatur im Vorfeld der Windschutzscheibe, so kann man bei Kenntnis der Scheibenoberflächentemperatur aus der Differenz der beiden Signale einen Wert als Indikator für die Beschlagbildung bestimmen.

Eine gattungsgemäße Sensoranordnung zur Anordnung auf einer Trägerfläche offenbart die WO 01/58731 A1. Hier ist vorgesehen, ein feuchteempfindliches Sensorelement im Bereich der Ausnehmung einer Trägerplatine der Sensoranordnung anzuordnen, wobei die feuchteempfindliche Fläche des Sensorelementes zur Trägerplatine hin orientiert und das Sensorelement in seinen Abmaßen größer als die Ausnehmung der Trägerplatine ist. In einem Anwendungsfall befindet sich das Sensorelement unterhalb der Trägerplatine, direkt auf der Wärmeleitschicht, wobei die feuchteempfindliche Fläche des Sensorelementes zur Trägerplatine hin orientiert ist. Das Sensorelement ist als kapazitiver Dünnschicht-Feuchtesensor ausgebildet, dessen Trägersubstrat beispielsweise Glas ist. Insbesondere die Anbringung des Sensorelementes unterhalb der Trägerplatine macht dieses empfindlich gegenüber mechanischen Zerstörungen vor- bzw. beim Anbringen auf die Wärmeleitschicht.

Aus der US 5,751,071 ist ein kapazitiver Fensterfeuchtigkeitssensor zum Erfassen der Feuchtigkeit auf der Oberfläche eines Dielektrikums bekannt, der mindestens ein paar kapazitive Elektrodenplatten aufweist, die beschichtet sind auf der Oberfläche des Dielektrikums, auf der die Feuchtigkeit erfasst werden soll.

Mit der US 5,568,977 wird ein Verfahren und eine Anordnung für eine Beschlagsdetektion offenbart, bei dem die Kondensation an einer Scheibe mittels Temperaturänderung eines Sensors durch Erhitzen und Abkühlen dieses empfindlichen Elements (Sensors) ermittelt wird. Das Element ist selbst thermisch leitfähig und haftet durch einen thermisch leitfähigen Kleber an der Oberfläche (Scheibe).

Eine Anordnung zum Belüften des Innenraums eines Kraftfahrzeuges ist der DE 37 21 659 A1 entnehmbar. Die leitfähigen Bahnen des Feuchtigkeitssensors werden hierbei in bekanter Art und Weise auf die Scheibe aufgedruckt oder aufgeklebt.

Die Aufgabe der vorliegenden Erfindung besteht darin, ein Sensormodul zur Detektion einer Benetzung bzw. beginnende Kondensation an der Oberfläche einer Scheibe aufzuzeigen, der sich durch einen verbesserten und robusteren Aufbau auszeichnet.

Gelöst wird die Aufgabe durch die Merkmale des Patenanspruchs 1 und des Patentanspruchs 2.

Der Erfindung liegt die Idee zugrunde, eine direkte thermische Ankopplung" eines Sensors dadurch zu erreichen, dass eine mit dem Sensor verbundene Metallplatte bündig zur Unterseite der Sensoranordnung und im funktionsgemäßen Gebrauch mit der Scheibe abschließt. Dadurch kann auf eine sonst notwendige bestimmung der Scheibentemperatur verzichtet werden, da der Sensors die Temperatur der Scheibe annimmt.
In einer Variante ist der Feuchtesensor ein kapazitiv arbeitender Feuchtesensor , bestehend aus zwei Elektroden, zwischen denen sich ein feuchteempfindliches Polymerelement befindet. Die direkte thermische Ankopplung erfolgt vorzugsweise über eine der Elektroden. Alternativ kann die Metallplatte verwendet werden, die mit einer der Elektroden thermisch verbunden ist.

Zumindest im Bereich der Metallplatte ist dieser bevorzugt eine dünne Folie mit hoher thermischer Leitfähigkeit auf die Scheibe aufgeklebt.

In Weiterführung der Erfindung ist auch eine Auswerteelektronik in dem Sensormodul integriert. Die Auswerteelektronik des Moduls ist durch das Sensorgehäuse gegen äußere Einflüsse geschützt. Das Sensormodul ist zudem am bzw. im Fuß eines Innenspiegels integrierbar.

Der Sensor muß nicht notwendiger Weise mit einer Polymerfolie aufgebaut sein. Alle anderen Arten von Feuchtefühler bzw. -sensoren, z.B. mit Interdigitalstruktur, resistiven Elementen etc., können ebenfalls verwendet werden.

In Weiterführung der Idee kann mit Hilfe eines Temperatursensors, der vorzugsweise auch im Modul integriert ist, die Scheibentemperatur gemessen werden, wenn mit diesem Sensormodul eine relative Luftfeuchtigkeit im Fahrzeuginnenraum bestimmt werden soll. Durch die ermittelte Scheibenfeuchte, die Scheibentemperatur und die Temperatur im Fahrgastraum kann dann auf die relative Luftfeuchte geschlossen werden. Ein zusätzlicher Innenraumfeuchtesensor wird nicht benötigt. Trotzdem kann bei dieser indirekten Luftfeuchtebestimmung die tatsächliche Feuchte im Fahrgastraum auch in Abhängigkeit von Einflußgrößen im Fahrgastraum, wie Anzahl und eigenes Temperaturverhalten der Mitfahrer, berücksichtigt werden.

Anhand eines Ausführungsbeispieles mit Zeichnung soll die Erfindung näher erläutert werden.

Es zeigt
- Fig.1: in einer seitliche Darstellung den Aufbau eines erfindungsgemäßen Sensormoduls,
- Fig. 2: ein weiteren Sensormodul mit einem Sensor aus Fig. 1.

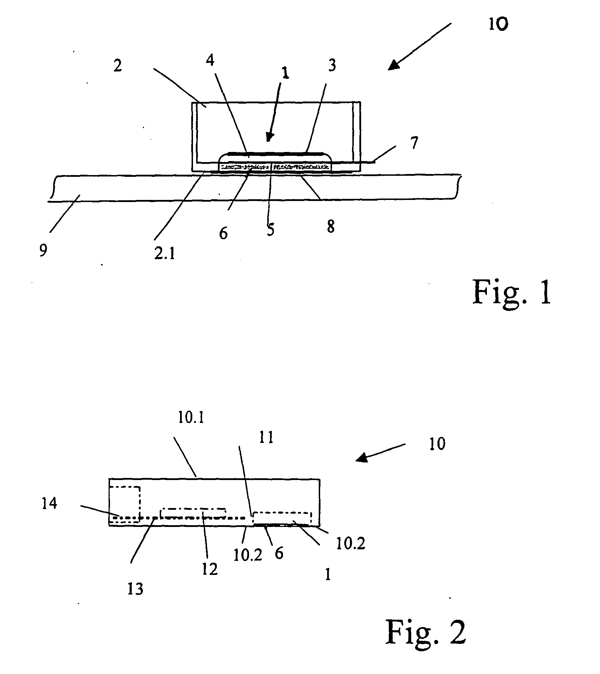

In Fig. 1 ist als eine Ausführungsform ein kapazitiv arbeitender Sensor 1 in einem Sensorgehäuse 2 dargestellt, der durch zwei Elektroden 3,5 und einem zwischen beiden befindlichen leitfähigen, feuchteempfindlichen Material 4, beispielsweise einer Polymerschicht, gebildet wird. Die zweite Elektrode 5 ist hier mit einer Metallplatte 6 zumindest thermisch verbunden. Die Metallplatte 6 schließt mit der Unterseite 2.1 des Gehäuses 2 ab und besitzt vorzugsweise die gleichen Außenmaße wie die Elektrode 5. Von der Elektrode 5 geht ein Anschluß 7 ab, der mit einer hier nicht näher dargestellten Auswerteeinheit elektrisch verbunden werden kann.

Das Gehäuse 2 weist zumindest im Bereich der Metallplatte 6 eine dünne Folie 8 zur thermischen Verbindung mit einer Scheibe 9 auf. Die Folie 8 besitzt eine hohe thermische Leitfähigkeit und eine gute Haftung. Als Folie 8 kann beispielsweise ein Aluminiumoxid mit Kleberanteilen vorgesehen werden, so daß der Sensor 1 mit seiner Unterseite 2.1 bündig auf der Scheibe 9 verklebt wird.
Durch die direkte Verbindung einer der Elektroden des Sensors 1 über die Metallplatte 6 mit der Scheibe 9 ist sichergestellt, daß der Sensor 1 in kürzester Zeit auf Scheibentemperatur gebracht wird, da die Metallplatte 6 die Temperatur der Scheibe 9 annimmt und an die eine Elektrode 5 weitergibt. Nicht näher dargestellt, aber alternativ möglich ist, daß die Elektrode 5 die Metallplatte 6 ersetzt, so daß über die Elektrode 5 die direkte thermische Ankopplung an die Scheibe 9 geschaffen wird.

Die sich durch die Feuchtigkeitsänderung an der Scheibe 9 ändernde Kapazität des Sensors 1 ist somit jeweils ein direkter Wert für die Feuchtigkeit an der Scheibe 9 ohne notwendige Kenntnis der Scheibentemperatur.

In Fig. 2 ist ein Sensormodul 10 mit dem Sensor 1 dargestellt. Der Sensor 1 ist durch einen Anschluß11 direkt mit einer eine Auswerteelektronik 12 oder Teile davon tragenden Leiterplatte 13 verbunden, die im gemeinsamen Gehäuse 10.1, vorzugsweise aus Kunststoff, untergebracht sind. Die Metallplatte 6 bzw. die Elektrode 5 des Sensors 1 werden dabei von einem Kunststoffrahmen 10.2 des Gehäuses 10.1 gehalten, wobei auch hier die Bündigkeit mit dem Gehäuse 10.1 gewährleistet ist. Über Steckverbindungen 14 ist das Modul 10 mit weiteren elektronischen Baugruppen (nicht näher dargestellt) verschaltbar.

Mit der vorliegenden Lösung besteht die Möglichkeit, das Modul 10 sehr klein auszuführen. So besitzt das Modul 10 vorzugsweise eine Länge von ca. 30mm, eine Breite von 20 mm und eine Höhe von 4 mm. Das erlaubt einen möglichen Einbau im Spiegelfuß eines nicht näher dargestellten Innenspiegels.

## Patentansprüche

1. Sensormodul (10) zur Detektion einer Beschlagneigung an einer Scheibe (9), insbesondere an einer Kraftfahrzeugscheibe, mit einem Feuchtesensor (1), **gekennzeichnet, durch** ein Sensorgehäuse (2, 10.1), welches mit seiner Unterseite (2.1) an der Scheibe (9) befestigbar ist, sowie eine Metallplatte (6), die mit der Unterseite (2.1) des Sensorgehäuses (2, 10.1) bündig abschließt und mit dem Sensor (1) thermisch gekoppelt ist.

2. Sensormodul (10) zur Detektion einer Beschlagneigung an einer Scheibe (9), insbesondere an einer Kraftfahrzeugscheibe, mit einem kapazitiv arbeitenden Sensor (1), welcher aus zwei Elektroden (3, 5) sowie einem zwischen beiden befindlichen feuchteempfindlichen Material (4) gebildet wird, **gekennzeichnet durch** ein Sensorgehäuse (2, 10.1), welches mit seiner Unterseite (2.1) an der Scheibe befestigbar ist, wobei eine erste der Elektroden (5) mit der Unterseite (2.1) des Sensorgehäuses (2, 10.1) bündig abschließt.

3. Sensormodul nach Anspruch 1 oder 2, **dadurch gekennzeichnet, dass** das Gehäuse (2, 10.1) zumindest im Bereich der Metallplatte (6) oder der ersten Elektrode (5) eine dünne Folie (8) oder einem Kleber hoher thermischer Leitfähigkeit aufweist, über die bzw. den das Sensormodul (10) an der Scheibe (9) anklebbar ist.

4. Sensormodul (10) nach einem der Ansprüche 1 bis 3, **gekennzeichnet durch** eine im Sensorgehäuse (10.1) befindliche Leiterplatte (13) sowie eine auf der Leiterplatte (13) befindliche Auswerteelektronik (12) oder Teilen davon, und einen am Sensor (1) befindlichen Anschluss (11), über den der Sensor (1) mit der Leiterplatte (13) verbunden ist.

5. Sensormodul (10) nach Anspruch 4, **dadurch gekennzeichnet, dass** die Metallplatte (6) bzw. die erste Elektrode (5) des Sensors (1) von einem Kunststoffrahmen (10.2) des Sensorgehäuses (10.1) gehalten wird.

6. Sensormodul (10) nach Anspruch 4 oder 5, **gekennzeichnet durch** einen integrierten Temperatursensor.

7. Sensormodul (10) nach einem der Ansprüche 4 bis 6, **dadurch gekennzeichnet, dass** es klein bauend ausgeführt ist und Abmasse von ca. 30x20x4 mm aufweist.

## Claims

1. Sensor module (10) for detecting incipient fogging on a pane (9), in particular a pane in a motor vehicle, with a moisture sensor (1), **characterised by** a sensor housing (2, 10.1), the underside (2.1) of which can be attached to the pane (9), and a metal plate (6), abutting flush with the underside (2.1) of the sensor housing (2, 10.1) and is thermally coupled with the sensor (1).

2. Sensor module (10) for detecting incipient fogging on a pane (9), in particular on a pane in a motor vehicle, with a capacitively operating sensor (1), which is formed from two electrodes (3, 5) and a moisture-sensitive material (4) located between the two electrodes, **characterised by** a sensor housing (2, 10.1), the underside (2.1) of which can be attached to the pane, whereby a first of the electrodes (5) abuts flush with the underside (2.1) of the sensor housing (2, 10.1).

3. Sensor module according to Claim 1 or 2, **characterised in that** the housing (2, 10.1) has a thin film (8) or a bonding agent with high thermal conductivity at least in the area of the metal plate (6) or the first electrode (5), via which the sensor module (10) can be affixed to the pane (9).

4. Sensor module (10) according to one of Claims 1 to 3, **characterised by** a printed circuit board (13) located in the sensor housing (10.1) and evaluation electronics (12), or parts thereof, located on the printed circuit board (13), and a connection (11) located on the sensor (1), via which the sensor (1) is connected to the printed circuit board (13).

5. Sensor module (10) according to Claim 4, **characterised in that** the metal plate (6) or the first electrode (5) of the sensor (1) is held by a plastic frame (10.2) of the sensor housing (10.1).

6. Sensor module (10) according to Claim 4 or 5, **characterised by** an integrated temperature sensor.

7. Sensor module (10) according to one of Claims 4 to 6, **characterised in that** it has a compact design, and has dimensions of approx. 30x20x4 mm.

## Revendications

1. Module de capteur (10) pour détecter une tendance à s'embuer sur une vitre (9), notamment sur une vitre de véhicule automobile, avec un capteur d'humidité (1), **caractérisé par** un boîtier de capteur (2, 10.1) qui peut être fixé par sa face inférieure (2.1) sur la vitre (9), et par une plaque métallique (6) qui se termine à fleur de la face inférieure (2.1) du boîtier de capteur (2, 10.1) et est couplée thermiquement au capteur (1).

2. Module de capteur (10) pour détecter une tendance à s'embuer sur une vitre (9), notamment sur une vitre de véhicule automobile, avec un capteur (1) à fonctionnement capacitif qui est formé de deux électrodes (3, 5) et d'un matériau (4) sensible à l'humidité se trouvant entre les deux électrodes, **caractérisé par** un boîtier de capteur (2, 10.1) qui peut être fixé par sa face inférieure (2.1) sur la vitre, sachant qu'une première (5) des électrodes se termine à fleur de la face inférieure (2.1) du boîtier de capteur (2, 10.1).

3. Module de capteur selon la revendication 1 ou 2, **caractérisé en ce que** le boîtier (2, 10.1) présente, au moins dans la région de la plaque métallique (6) ou de la première électrode (5), une mince feuille (8) ou un adhésif de haute conductibilité thermique, par l'intermédiaire duquel/de laquelle le module de capteur (10) peut être collé sur la vitre (9).

4. Module de capteur (10) selon l'une quelconque des revendications 1 à 3, **caractérisé par** une plaquette imprimée (13) se trouvant dans le boîtier de capteur (10.1) et par une unité électronique d'interprétation (12) ou des parties d'une telle unité se trouvant sur la plaquette imprimée (13), ainsi que par un branchement (11) se trouvant sur le capteur (1) et par l'intermédiaire duquel le capteur (1) est relié à la plaquette imprimée (13).

5. Module de capteur (10) selon la revendication 4, **caractérisé en ce que** la plaque métallique (6) ou selon le cas la première électrode (5) du capteur (1) est maintenue par un cadre en matière plastique (10.2) du boîtier de capteur (10.1).

6. Module de capteur (10) selon la revendication 4 ou 5, **caractérisé par** un capteur de température intégré.

7. Module de capteur (10) selon l'une quelconque des revendications 4 à 6, **caractérisé en ce qu'**il est réalisé de petite taille et présente des dimensions d'environ 30x24x4 mm.
